(19) Europäisches Patentamt
European Patent Office
Office européen des brevets

(11) Veröffentlichungsnummer: **0 092 242**
**B1**

# (12) EUROPÄISCHE PATENTSCHRIFT

(45) Veröffentlichungstag der Patentschrift: **06.08.86**

(51) Int. Cl.⁴: **C 04 B 24/26**

(21) Anmeldenummer: **83103793.2**

(22) Anmeldetag: **19.04.83**

(54) **Verwendung von oberflächenaktiven Polymeren gegen Ausblühungen von Beton.**

(30) Priorität: **20.04.82 DE 3214572**

(43) Veröffentlichungstag der Anmeldung: **26.10.83 Patentblatt 83/43**

(45) Bekanntmachung des Hinweises auf die Patenterteilung: **06.08.86 Patentblatt 86/32**

(84) Benannte Vertragsstaaten: **AT BE DE FR GB IT LU NL SE**

(56) Entgegenhaltungen:
**EP - A - 0 006 279**
**EP - A - 0 050 354**
**DE - A - 2 404 269**
**GB - A - 1 388 349**
**GB - A - 2 003 461**

(73) Patentinhaber: **Chemische Werke Brockhues AG, Mühlstrasse 118, D-6229 Walluf (DE)**

(72) Erfinder: **Jungk, Axel E., Dr., Kranichstrasse 22, D-6085 Nauheim (DE)**
Erfinder: **Jager, Jürgen, Dr., D-6229 Walluf (DE)**

(74) Vertreter: **Fürniss, Peter, Dr., Am Büchl 15, D-8050 Freising (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft die Verwendung eines oberflächenaktiven Polymer, das beim Aushärten von Beton seine Oberflächenaktivität irreversibel verliert und dabei zu einem wasserunlöslichen Produkt denaturiert wird, als Betonadditiv zur Verringerung der Ausblühungen von Beton.

Bei der Herstellung von Beton treten unerwünschte Ausscheidungen von Salzen auf, die Ausblühungen genannt werden. Beton enthält beträchtliche Mengen chemisch nicht gebundenen Kalziumoxids bzw. Kalziumhydroxids. Das Auskristallisieren der wasserlöslichen Kalziumverbindungen führt in der Regel zu dichten Ausblühungen. Diese karbonatisieren im Laufe der Zeit und überdecken die ursprüngliche Betonfarbe bzw. Betoneinfärbung mit einem Grau- bzw. Weissschleier. Besonders unerwünscht sind diese Erscheinungen bei Sichtbeton und überall dort, wo die Betonoberfläche auch dekorativen Zwecken dient. Besonders störend wirken sich diese Ausblühungen natürlich bei dunklen, insbesondere schwarzen Betonoberflächen aus.

Es gibt auf dem Markt zahlreiche Anti-Ausblühmittel, die in der Hauptsache oberflächenaktive Substanzen sind, die ihre Wasserlöslichkeit nicht verlieren und somit im Laufe der Zeit Ausblühungen auf Beton sogar fördern, statt sie zu verringern. Im Stand der Technik haben also Massnahmen gegen Ausblühungen zu keinem befriedigenden Ergebnis geführt.

Der Erfindung liegt daher die Aufgabe zugrunde, die Entstehung von Ausblühungen beim Aushärten von Beton zu vermeiden oder wenigstens wesentlich zu verringern.

Diese Aufgabe wird durch die eingangs genannte Verwendung eines bestimmten oberflächenaktiven Polymeren gelöst.

Aus der nicht vorveröffentlichten Druckschrift EP-A-0 050 354 ist ein Färbemittel für zementhaltige Gegenstände, die der Witterung ausgesetzt sind, bekannt. Dieses bekannte Färbemittel enthält neben mindestens einem Pigment und gegebenenfalls anderen Zusätzen als oberflächenaktive Substanz ein oberflächenaktives Polymer, das beim Aushärten des zementhaltigen Gegenstandes seine Oberflächenaktivität irreversibel verliert.

Das oberflächenaktive Polymer, das beim Aushärten von Beton seine Oberflächenaktivität irreversibel verliert, und dabei zu wasserunlöslichen Produkten denaturiert wird, wird bei der Herstellung von Beton bzw. Asbestzement oder ähnlichen Produkten dem Gemisch aus hydraulischen Bindemitteln, Magerungsmitteln, Wasser und anderen Additiven zugesetzt.

Der Ausdruck «Beton» bedeutet im Rahmen der Beschreibung und der Patentansprüche Teile aus Beton wie Betonsteine, Betonplatten, Betondachsteine, Betondachpfannen, Betonverbundsteine, Betonpflastersteine, Betonfassaden, Betonbrücken, Betongebäude usw., allgemein Sichtbetonflächen, aber auch durch Fasern verstärkte Produkte wie Platten, Rohre, Fensterbänke u.a. aus Asbestzement, wobei Asbest auch durch anderes Fasermaterial ersetzt werden kann. Beton im Sinne dieser Erfindung können auch ungeformte Teile, wie z.B. Strassennutzschichten, sein.

Das oberflächenaktive Polymer kann in Mengen von 0,01 bis 10 Gew.-%, bezogen auf Zement, eingesetzt werden. Vorzugsweise werden 0,08 bis 0,8 Gew.-% des oberflächenaktiven Polymeren, bezogen auf Zement, eingesetzt.

Im Rahmen dieser Erfindung eignen sich solche oberflächenaktiven Substanzen, deren Oberflächenaktivität beim Aushärten im Beton irreversibel verlorengeht. Dabei wandeln sie sich in ein wasserunlösliches, festes Produkt um.

Durch die erfindungsgemässe Verwendung der oberflächenaktiven Polymeren, die beim Aushärten des Betons ihre Oberflächenaktivität irreversibel verlieren und dabei zu wasserunlöslichen Produkten denaturiert werden, werden Ausblühungen von Beton zurückgedrängt bzw. vollständig verhindert.

Ein weiterer Vorteil dieser Erfindung besteht darin, dass die Wetterbeständigkeit von Betoneinfärbungen deutlich verbessert wird. Besonders vorteilhaft wirkt sich dies auf die Wetterfestigkeit von russhaltigen Färbemitteln für Beton in den oben erwähnten Fällen aus. Dies gilt sowohl für Einfärbemittel, die Russ als einziges Pigment beinhalten, als auch für Färbemittel, die Russ in Verbindung mit anderen Pigmenten enthalten.

Beispiele für oberflächenaktive Stoffe, die beim Aushärten des Betons ihre Oberflächenaktivität irreversibel verlieren und dabei zu wasserunlöslichen Produkten denaturiert werden und erfindungsgemäss verwendbar sind, sind Salze von Polyakrylsäuren, insbesondere Ammoniumsalze, aber auch andere ionische Copolymerisate. Vorzugsweise wird als oberflächenaktiver Stoff ein wasserlösliches Salz, insbesondere das Ammoniumsalz eines niedermolekularen, polyfunktionellen Styrol-Maleinsäureanhydrid-Copolymerisats, eingesetzt, welches nach dem Eintrocknen wasserunlöslich wird und somit seine Oberflächenaktivität verliert.

Für die überraschende Wirkung der erfindungsgemässen Verwendung könnten die folgenden theoretischen Überlegungen eine Erklärung sein:

Durch die Inaktivierung der oberflächenaktiven Eigenschaften der verwendeten oberflächenaktiven Substanzen wird nach Aushärten und Trocknen des Betons die Benetzung des Betons und damit des freien Kalziumoxids bzw. – hydroxids durch Wasser aus den Kapillaren aus Tau und Regen vermieden. Mangels Benetzung des Kalziumoxids bzw. -hydroxids durch das Kapillarwasser wird sein Transport per Diffusion aus dem Innern des Betons nach draussen verringert bzw. verhindert. Zusätzlich verringern die Reaktionsprodukte aus den erfindungsgemässen, eingesetzten oberflächenaktiven Substanzen durch Bildung von Kalziumsalzen und/oder durch Bildung wasserunlöslicher und hydrophober Substanzen die Betonporen. Damit verringert sich der effektive Kapillar-Querschnitt im Beton im Hinblick auf Wasserdurchdringung und -diffusion und liefert somit einen weiteren Beitrag zur Verringerung bzw. Verhinderung von Ausblühungen.

Die Erfindung soll anhand der folgenden Beispiele näher erläutert werden:

Beispiel 1

Herstellung von Dachsteinen:

410 kg Zement (Normzement PZ 45) und 1100 kg Kies *1) wurden unter intensivem Mischen mit insgesamt 144 l Wasser und 8,2 kg einer handelsüblichen, flüssigen schwarzen Zementfarbe (Carbofin® L 1629 der Chemischen Werke Brockhues AG, Walluf) anthrazitfarben eingefärbt. Es wurden mehrere Mischungen hergestellt. Je eine Mischung wurde mit den in Tabelle 1 aufgeführten Mengen eines oberflächenaktiven Polymeren (SMA-Harz 1440 *2) versetzt. Die Mischungen wurden anschliessend zu Dachsteinen geformt. Die Dachsteine wurden nach 24stündiger Lagerung in der Trockenkammer für weitere 6 Tage bei Raumtemperatur gelagert; die trockenen Dachsteine wurden anschliessend auf einer schattenlosen, nach Süden ausgerichteten, 45°-geneigten Bewitterungsfläche ausgelegt und rund 12 Monate lang beobachtet.

Zur Beurteilung der bewitterten Dachsteine wurden 11 eingefärbte Zementsteinprismen in obiger Zusammensetzung mit unterschiedlichen Einfärbungen als Vergleichsproben zur Aufstellung einer Grauskala hergestellt. Die Farbzusätze betrugen jeweils 0, 10, 20, 30, 40, 50, 60, 70, 80, 90 und 100 Gew.-%, bezogen auf die Farbmenge in den für die Beispiele bewitterten Betonkörpern. Die Vergleichsproben wurden trocken und im Dunkeln gelagert.

Die Beurteilung der bewitterten Dachsteine erfolgte durch visuellen Vergleich mit den Prismen der oben definierten Grauskala. Die Ergebnisse lassen sich der folgenden Tabelle entnehmen:

Tabelle 1

| Menge des zugesetzten oberflächenaktiven Polymers (Gew.-%) | Graustufe als Funktion des Bewitterungszeitraumes | | | | | |
|---|---|---|---|---|---|---|
| | Bewitterungszeit | | | | | |
| | 7 Tage | 1 Monat | 2 Monate | 4 Monate | 8 Monate | 12 Monate |
| 0 | 75% | 65% | 60% | 55% | 50% | 50% |
| 0,03 | 90% | 85% | 85% | 80% | 75% | 70% |
| 0,06 | 95% | 90% | 90% | 90% | 85% | 85% |
| 0,12 | 100% | 100% | 95% | 95% | 95% | 95% |

*1) Körnung 0 bis 3 mm.

*2) SMA-Harz 1440 ist ein Ammoniumsalz des niedrigmolekularen, teilveresterten Styrol-Maleinsäureanhydrid-Copolymerisats vom zahlenmittleren Molekulargewicht M = 2 500, einem Schmelzbereich von 55–75°C und der Säurezahl 175 der Firma Arco Chemical, Philadelphia, USA, und besitzt die Formel:

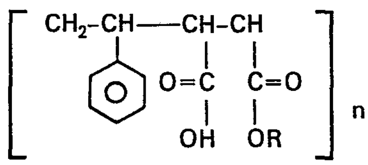

Beispiel 2

Eine zweite Versuchsreihe wurde mit Gehwegplatten im Farbton anthrazit durchgeführt. Die Betonzusammensetzung unterschied sich von der Dachsteinmischung des Beispiels 1 allerdings durch eine andere Sieblinie der Zusatzstoffe und einen niedrigeren Wasserzementfaktor (siehe unten).

Tabelle 2

| Menge des zugesetzten oberflächenaktiven Polymers (Gew.-%) | Farbstufe als Funktion des Bewitterungszeitraumes | | | | | |
|---|---|---|---|---|---|---|
| | Bewitterungszeit | | | | | |
| | 7 Tage | 1 Monat | 2 Monate | 4 Monate | 8 Monate | 12 Monate |
| 0 | 75% | 65% | 60% | 55% | 50% | 45% |
| 0,03 | 90% | 85% | 80% | 75% | 70% | 70% |
| 0,06 | 95% | 90% | 90% | 90% | 85% | 80% |
| 0,12 | 100% | 95% | 95% | 95% | 95% | 95% |

Kieskörnung bis 8 mm,
Wasserzusatz 130 l.

Die obigen Beispiele zeigen, dass die Zugabe entsprechender Polymerer zu Betonen, die hydraulischen Zement enthalten, zu einer deutlichen Verringerung des Ausblüheffekts führt.

**Patentanspruch**

Verwendung eines oberflächenaktiven Polymer, das beim Aushärten von Beton seine Oberflächenaktivität irreversibel verliert und dabei zu einem wasserunlöslichen Produkt denaturiert wird, ausgenommen als Bestandteil eines Färbemittels für zementhaltige Gegenstände, die der Witterung ausgesetzt sind und ausser dem oberflächenaktiven Polymer mindestens ein Pigment und gegebenenfalls andere Zusätze enthält, als Betonadditiv zur Verringerung der Ausblühungen von Beton.

**Claim**

Use of a surfactant polymer which during hardening irreversibly loses its surface activity and becomes denaturated to a product insoluble in water, exept if being part of a coloring agent for cement-containing objects exposed to weather, and containing, apart from the surfactant polymer, at least one coloring agent and desired other additives, as concrete additive for reducing efflorescence of the concrete.

**Revendication**

Utilisation d'un polymère tensio-actif qui perd irréversiblement son activité de surface lors de la prise du béton et qui se dénature ainsi en produit insoluble dans l'eau, à l'exception du cas où il est une composante d'un colorant pour des objets contenant du ciment, qui sont exposés à toutes les conditions climatiques et qui contiennent, outre un polymère tensio-actif, au moins un pigment et, en tant que de besoin, d'autres composants, comme additifs du béton en vue de la diminution de sa délitescence.